(19) Europäisches Patentamt
European Patent Office
Office européen des brevets

(11) **EP 4 101 753 A2**

(12) **EUROPÄISCHE PATENTANMELDUNG**

(43) Veröffentlichungstag:
**14.12.2022 Patentblatt 2022/50**

(21) Anmeldenummer: **22175044.1**

(22) Anmeldetag: **24.05.2022**

(51) Internationale Patentklassifikation (IPC):
**B63B 49/00** (2006.01)     **B63B 79/40** (2020.01)
**G01C 21/20** (2006.01)     **G01S 19/39** (2010.01)
**G05D 1/02** (2020.01)

(52) Gemeinsame Patentklassifikation (CPC):
**B63B 79/40; B63B 27/14; G01C 21/203;
G01S 19/393; G05D 1/0206;** B63B 27/10;
B63H 21/21

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **07.06.2021 DE 102021205695**

(71) Anmelder: **Van Halteren Technologies Boxtel B.V.
5281 RS Boxtel (NL)**

(72) Erfinder:
• **Schleyer, Markus
71640 Ludwigsburg (DE)**
• **Nguyen, Quang Huy
70193 Stuttgart (DE)**
• **Erz, Michael
75417 Muehlacker (DE)**

(74) Vertreter: **Rau, Schneck & Hübner
Patentanwälte Rechtsanwälte PartGmbB
Königstraße 2
90402 Nürnberg (DE)**

(54) **SYSTEM UND VERFAHREN**

(57)     Offenbart ist ein System mit einem Objekt, das eine Andockstelle und einen Marker oder mehrere Marker aufweist. Außerdem hat das System ein weiteres Objekt, das zumindest einen Sensor hat, um den oder die Marker zu erfassen. Das System hat eine Steuereinheit mit einem Bestimmungs-Algorithmus, der basierend auf den Sensordaten des zumindest einen Sensors die Markerposition und/oder die Markerorientierung bezüglich des Sensors ermittelt. Außerdem hat der Bestimmungs-Algorithmus Zugriff auf einen Relativwert in Form einer Relativposition und/oder Relativorientierung zwischen dem Marker oder dem jeweiligen Marker und der Andockstelle. Die Steuereinheit kann dann basierend auf der Markergröße und dem Relativwert die Andockstellenposition und/oder die Andockstellenorientierung ermitteln.

**Fig. 1**

EP 4 101 753 A2

**Beschreibung**

Gebiet der Erfindung

Die Erfindung betrifft ein System mit einem ersten Objekt, wie beispielsweise einer Windenergieanlage, das eine Andockstelle aufweist, und mit einem zweiten Objekt, das zum Andocken an die Andockstelle vorgesehen ist. Für den Andockvorgang weist das System einen Sensor und einen Aktor zum Bewegen eines der Objekte auf. Des Weiteren betrifft die Erfindung ein Verfahren mit einem derartigen System.

Hintergrund der Erfindung

In der Offshore-Industrie, wie zum Beispiel bei der Rohstoffförderung oder bei der Windenergiegewinnung, fallen zahlreiche Operationen an. Beispielsweise fallen Operationen zwischen verschiedenen Schiffen, Schiffen und feststehenden Strukturen, wie beispielsweise Windenergieanlagen oder feste Bohrplattformen, und Schiffen und schwimmenden Strukturen, wie beispielsweise schwimmenden Bohrplattformen oder unter Wasser an Seilen befindliche Gegenstände, an. Häufig werden dabei Personen oder Güter von einer Struktur zur anderen transferiert. Es ist dabei notwendig, dass die Verbindungen zwischen den Strukturen derart aufgebaut werden, dass keine Personen verletzt oder Gegenstände beschädigt werden. Die ungewollten und nur schwer oder nicht vorhersagbaren Bewegungen der Körper aufgrund von Wellenbewegungen und Wetterbedingungen stellen hierbei üblicherweise das Hauptproblem dar. Bei nicht optimalen Wetterbedingungen steigt das Risiko bei derartigen Operationen erheblich an, so dass diese häufig unterbrochen oder verschoben werden müssen. Wetterbedingte Verschiebungen oder Ausfälle führen zu erheblichen finanziellen Einbußen. Aus diesem Grund besteht ein hohes Interesse an Systemen, die es erlauben, auch Operationen bei schlechteren Wetterbedingungen auszuführen. Es gibt bereits technische Systeme, die hierfür bestimmte Operationen ermöglichen. So sind beispielsweise Hubkompensationssysteme für Winden bekannt. Bei diesen wird eine Hubbewegung des Schiffes in der Endposition des Seils, wo sich beispielsweise der Kranhaken befindet, kompensiert. Das heißt, der Kranhaken steht praktisch an einer festen Position im Raum, obwohl sich das Schiff wellenbedingt bewegt. Außerdem ist eine bewegungskompensierte Schiffsgangway bekannt. Hierbei wird das Ende oder die Spitze der beweglichen Schiffsgangway bewegungskompensiert. Da die Spitze der Gangway trotz Schiffsbewegung an einer festen Position im Raum gehalten werden kann, ist es möglich, an festen Strukturen, wie beispielsweise Windenergieanlagen oder Windrädern, anzudocken.

Offenbarung der Erfindung

Demgegenüber liegt der Erfindung die Aufgabe zugrunde, ein System und ein Verfahren zu schaffen, mit dem auf vorrichtungstechnisch einfache und kostengünstige Weise ein sicheres Andocken zwischen zwei, insbesondere wassergebundenen, Objekten ermöglicht ist.

Die Aufgabe hinsichtlich des Systems wird gelöst gemäß den Merkmalen des Anspruchs 1 und hinsichtlich des Verfahrens gemäß den Merkmalen des Anspruchs 15.

Vorteilhafte Weiterbildungen der Erfindung sind Gegenstand der Unteransprüche.

Erfindungsgemäß ist ein System mit einem ersten Objekt, wie beispielsweise eine Windenergieanlage oder eine feste oder schwimmende Bohrplattform, vorgesehen. Das erste Objekt hat eine Andockstelle und zumindest einen mit der Andockstelle in Bezug stehenden Marker, der beispielsweise benachbart zur Andockstelle sichtbar ausgebildet ist. Des Weiteren kann das System ein zweites Objekt aufweisen, das wiederum ein Bauteil mit einem Kontaktbereich hat. Bei dem Bauteil handelt es sich beispielsweise um eine Gangway. Das zweite Objekt kann beispielsweise ein Schiff mit der Gangway sein. Vorzugsweise ist der Kontaktbereich in Kontakt mit der Andockstelle bringbar und/oder benachbart zu dieser anordenbar, so dass beispielsweise Personen und/oder Güter von einem Objekt zum anderen Objekt überführt werden können. Das zweite Objekt weist vorzugsweise zumindest einen Aktor auf. Mit diesem kann das Objekt und/oder das Bauteil bewegt werden. Insbesondere für eine Positionsänderung des Kontaktbereichs bezüglich der Andockstelle. Alternativ oder zusätzlich ist denkbar, dass das erste Objekt zumindest einen Aktor aufweist, um dieses zu bewegen, falls dieses bewegbar ist. Das zweite Objekt weist vorzugsweise zumindest einen Sensor auf und eine mit dem Sensor verbundene Steuereinheit. Der zumindest eine Sensor ist vorzugsweise derart ausgestaltet, den zumindest einen Marker zu erfassen. Über Sensordaten kann er den erfassten Marker zur Steuereinheit übermitteln. Die Steuereinheit weist vorzugsweise einen Bestimmungs-Algorithmus auf. Dieser kann eingerichtet sein, basierend auf den Sensordaten des zumindest einen Sensors, insbesondere hinsichtlich des Markers, zumindest eine Markergröße zu ermitteln. Bei der Markengröße handelt es sich um eine Position und/oder um eine Orientierung und/oder um eine Geschwindigkeit und/oder eine Drehgeschwindigkeit des zumindest einen Markers bezüglich des diesen Marker erfassenden Sensors und/oder bezüglich einer Referenz am zweiten Objekt. Als Referenz kann beispielsweise der Kontaktbereich dienen. Des Weiteren kann beim System ein Relativwert vorgesehen sein. Dieser kann beispielsweise in Form einer Relativposition und/oder Relativorientierung und/oder Relativgeschwindigkeit und/oder Relativdrehgeschwindigkeit zwischen der Andockstelle und dem zumindest einen Marker ausgebildet sein. Die Steuereinheit ist vorzugsweise weiter derart eingerichtet, dass diese basierend auf der vom Bestimmungs-Algorithmus ermittelten Markergröße des zumindest einen Markers und dem Relativwert eine Andockstellengröße, insbesondere eine Position der Andockstelle, bezüglich des diesen Marker erfassenden Sensors oder bezüglich einer Referenz am zweiten Objekt ermittelt.

Diese Lösung hat den Vorteil, dass, beispielsweise, wenn die Andockstelle verdeckt ist, beispielsweise indem der Kontaktbereich des einen Objekts an der Andockstelle anliegt, die Andockstellengröße, beispielsweise in Form ihrer Position, weiterhin über den Marker ermittelbar ist. Somit ist selbst bei verdeckter Andockstelle eine Detektion der Andockstelle ermöglicht. Die Erfindung führt zu einer robusten, kostengünstigen Bestimmung der Andockstellengröße, insbesondere der Position der Andockstelle, mit Hilfe von zumindest einer Markierung. Außerdem ermöglicht die Erfindung die Positionsbestimmung der Andockstelle auch bei Verdeckung. Mit anderen Worten wird mit der Erfindung die Verdeckungsproblematik während der Phase, bei der eine Gangway an der Andockstelle angedockt ist, gelöst. Für die Erfindung kann beispielsweise auf breit getestete und teils bereits vorhandenen Bestimmungs-Algorithmen oder Positions-/Orientierungsbestimmungsalgorithmen zurückgegriffen werden, die beispielsweise für den Marker oder für einen bestimmten Marker optimiert sind. Hierdurch ist ein geringer Softwareentwicklungsaufwand und Testaufwand erforderlich. Außerdem ist eine hohe Robustheit bei einer Erkennung der Andockstelle erreicht. Es kann, wie bereits angeführt, auch bei voller Verdeckung die Position und Orientierung der Andockstelle bestimmt werden.

In weiterer Ausgestaltung der Erfindung kann vorgesehen sein, dass das System einen Speicher hat oder auf einen Speicher zugreifen kann, in dem der zumindest eine Relativwert hinterlegt ist. Somit kann auf einfache Weise anhand der Markergröße und des Relativwerts die gewünschte Andockstellengröße ermittelt sein, ohne dass der Relativwert gemessen oder sensiert werden muss. Es ist denkbar, dass das System ein Eingabemittel aufweist, über das ein Benutzer den Relativwert im System eingeben oder einspeisen kann. Der Relativwert, insbesondere die Relativposition, zwischen Andockstelle und Marker können beispielsweise durch einen Vermessungs- und/oder Kalibrierungsvorgang initial oder vorab ermittelt sein. Es ist beispielsweise denkbar, dass vor dem Andockvorgang die Andockstellengröße, wie beispielsweise die Andockstellenposition und/oder die Andockstellenorientierung der Andockstelle und die Markergröße, beispielsweise die Position und/oder Orientierung des Markers, bestimmt werden. Daraus kann dann der Relativwert zwischen der Andockstelle und dem zumindest einen Marker oder zwischen der Andockstelle und mehreren Markern errechnet werden. Der Relativwert kann dann beispielsweise im Speicher hinterlegt sein. Denkbar wäre auch, eine laufende Erfassung des Relativwerts, insbesondere der Relativposition, vorzusehen, um bekannte Relativpositionen zu plausibilisieren. Der zumindest eine Relativwert der Andockstelle und/oder Relativwerte bei unterschiedlichen Andockstellen und/oder bei mehreren Markern sind beispielsweise in einer Datenbank hinterlegt. Die Andockstellengröße, insbesondere die Position und Orientierung der Andockstelle, bezüglich des zumindest einen Sensors lassen sich vorzugsweise als Summe oder in Form einer Vektoraddition der als Vektor ausgebildeten Markergröße und des als Vektor ausgebildeten Relativwerts bestimmen. Bei dem Vektor der Markergröße handelt es sich vorzugsweise um den Vektor zwischen dem zumindest einen Sensor und dem zumindest einen Marker und bei dem Vektor des Relativwerts um den Vektor zwischen dem zumindest einen Marker und der Andockstelle.

In weiterer Ausgestaltung der Erfindung ist der zumindest eine Sensor oder ein weiterer Sensor derart ausgebildet, die Andockstelle zu erfassen und über Sensordaten der Steuereinheit zu übermitteln. Die Steuereinheit kann einen oder den Bestimmungs-Algorithmus aufweisen, der eingerichtet ist, basierend auf den Sensordaten des Sensors hinsichtlich der Andockstelle zumindest eine Andockstellengröße zu ermitteln. Die Andockstellengröße kann beispielsweise in Form einer Position und/oder Orientierung und/oder Geschwindigkeit und/oder Drehgeschwindigkeit der Andockstelle bezüglich des die Andockstelle erfassenden Sensors und/oder bezüglich einer Referenz am zweiten Objekt, wie beispielsweise der Kontaktbereich, und/oder bezüglich des zumindest einen Markers ausgebildet sein. Die Steuereinheit kann dann basierend auf der Markergröße und der Andockstellengröße den Relativwert ermitteln. Somit ist es beispielsweise nicht mehr notwendig, den Relativwert vorab initial zu bestimmen und beispielsweise in einer Datenbank zu hinterlegen. Somit kann auch an Andockstellen angedockt werden, die beispielsweise vorher nicht vermessen wurden. Die Bestimmung des Relativwerts erfolgt vorzugsweise vor dem Andockvorgang.

Vorzugsweise wird über den Bestimmungs-Algorithmus der Relativwert basierend auf der Markergröße und der Andockstellengröße ermittelt, wenn der Relativwert zwischen der Andockstellengröße und dem zumindest einen Marker konstant oder gleichbleibend ist. Somit ist vorzugsweise das System auf diesen Einsatzfall vorzugsweise beschränkt, um den softwaretechnischen und vorrichtungstechnischen Aufwand gering zu halten. Durch die Ermittlung des Relativwerts basierend auf der Markergröße und der Andockstellengröße ist es somit nicht mehr notwendig, dass dieser vorab bekannt ist, sondern die Tatsache, dass der Relativwert kontant ist, kann bereits ausreichen. Der Relativwert kann somit beispielsweise kurz vor dem Andockvorgang ermittelt werden.

Vorzugsweise wird die Andockstellengröße über den Sensor oder den weiteren Sensor nur zeitweise erfasst, um Ressourcen zu sparen. Es hat sich gezeigt, dass eine zeitweise Erfassung ausreichend sein kann, um den Relativwert zu ermitteln. Alternativ oder zusätzlich wäre denkbar, die Andockstellengröße über das Mittel in das System einzugeben und beispielsweise im Speicher zu hinterlegen.

In weiterer Ausgestaltung ist denkbar, dass, wenn das System über den Bestimmungs-Algorithmus den Relativwert basierend auf der Andockstellengröße und der Markergröße ermittelt hat, diesen im Speicher, insbesondere in der Datenbank, zu hinterlegen. Hierdurch kann auf diesen bei zukünftigen Andockvorgängen zurückgegriffen werden, ohne dass eine erneute Ermittlung oder Berechnung notwendig ist.

Bei einer bevorzugten Ausführungsform der Erfindung kann die Ausgestaltung der Andockstelle beim System hinterlegt sein. Hinsichtlich der Ausgestaltung kann beispielsweise eine Farbe und/oder eine Geometrie und/oder eine konstruktive Gestaltung der Andockstelle hinterlegt oder gespeichert sein. Der Bestimmungs-Algorithmus kann dann die hinterlegte Ausgestaltung mit den Sensordaten vergleichen, um aus den Sensordaten die Andockstelle zu ermitteln, um daraus wiederum die Andockstellengröße zu ermitteln. Beispielsweise kann für einen Sensor oder für einen jeweiligen Sensor ein spezieller Algorithmus bereitgestellt sein, der/die Teil des Bestimmungs-Algorithmus sein kann/können. Der/die Algorithmus/Algorithmen ermöglichen beispielsweise die Bestimmung der Andockstellengröße der, insbesondere vordefinierten, Andockstelle aus dem Sensorsignal oder dem jeweiligen Sensorsignal. Denkbar wäre für die Ermittlung der Andockstelle, beispielsweise basierend auf einem Kamerabild eines Sensors in Form einer Kamera, maschinelles Lernen (ML) einzusetzen. Als Trainingsdaten könnten hierbei eine Vielzahl unterschiedlicher Abbildungen von Andockstellen dienen. Die Steuereinheit wäre dann mit einem entsprechend trainierten ML-Algorithmus in der Lage die Andockstelle sicher in den Sensordaten zu identifizieren.

Bei einem weiteren bevorzugten Ausführungsbeispiel der Erfindung kann das System eine Anzeigevorrichtung aufweisen. Auf dieser können beispielsweise die Sensordaten des zumindest einen die Andockstelle erfassenden Sensors dargestellt sein. Vorzugsweise hat das System ein Mittel, über das die Andockstellengröße, insbesondere die Position der Andockstelle, auf der Anzeigevorrichtung von einem Benutzer markierbar ist. Basierend auf der Markierung ist denkbar, dass der Bestimmungs-Algorithmus die Andockstellengröße, also beispielsweise die Position der Andockstelle, relativ zum die Andockstelle erfassenden Sensor ermittelt. Somit kann die Andockstelle vom Benutzer ausgewählt werden. Mit anderen Worten definiert der den Andockvorgang ausführende Bediener die Andockstelle vor dem Andockvorgang, z. B. indem er auf dem Display die gewünschte Position der Andockstelle markiert. Daraus kann/können der/die feste/n Relativwert/e, wie beispielsweise eine Relativposition und/oder Relativorientierung zwischen der Andockstelle und dem zumindest einen Marker berechnet werden.

In weiterer Ausgestaltung der Erfindung ist eine Mehrzahl von Sensoren vorgesehen, um einen oder mehrere Marker und/oder die Andockstelle zu erfassen.

Somit ist eine Redundanz geschaffen und die Ermittlung der Andockstellengröße kann mit einer höheren Genauigkeit und/oder Sicherheit bestimmt werden.

Vorzugsweise hat der Bestimmungs-Algorithmus einen Sensor-Fusions-Algorithmus. Dieser kann derart ausgestaltet sein, um Sensordaten der Mehrzahl von Sensoren zu fusionieren. Daraus kann dann vorzugsweise eine, insbesondere eine einzige, Markergröße und/oder eine, insbesondere einzige, Andockstellengröße ermittelt werden. Ohne Sensorfusion könnte für jeden Sensor ein separates Ergebnis oder eine separate Andockstellengröße ermittelt sein. Um zu vermeiden, dass es mehrere Ergebnisse gibt, wird somit mittels einer Sensorfusion und/oder des Sensor-Fusions-Algorithmus eine finale oder zusammengefasste Andockstellengröße ermittelt, die auf den fusionierten Ergebnissen der einzelnen Sensoren basiert.

In weiterer Ausgestaltung der Erfindung kann der Sensor-Fusions-Algorithmus zum Zusammenführen der Sensordaten der Mehrzahl von Sensoren als graphbasierte Optimierung und/oder als Kalman-Filter ausgebildet sein. Der Kalman-Filter ist beispielsweise als Extended Kalman-Filter oder als Error-State Kalman-Filter ausgebildet. Derartige Algorithmen sind bekannt und können somit mit geringem Aufwand für das erfindungsgemäße System eingesetzt werden.

Vorzugsweise fusioniert der Sensor-Fusions-Algorithmus die Sensordaten direkt.

Vorzugsweise fusioniert der Sensor-Fusions-Algorithmus die jeweiligen Markergrößen, die basierend auf einem jeweiligen Sensor ermittelt sind, und/oder die jeweiligen Andockgrößen, die basierend auf einem jeweiligen Sensor ermittelt sind.

In weiterer Ausgestaltung der Erfindung, insbesondere bei einem bekannten Relativwert oder bei bekannten Relativwerten, kann der Sensor-Fusions-Algorithmus zunächst eine jeweilige Andockstellengröße ermitteln. Die jeweilige Andockstellengröße kann sich aus einer jeweiligen Markergröße, die basierend auf einem jeweiligen Sensor ermittelt ist, und dem jeweiligen Relativwert ergeben. Die jeweiligen Andockstellengrößen können dann im Anschluss fusioniert werden. Mit anderen Worten kann jede Markergröße, insbesondere die Position und/oder Orientierung, mit dem jeweiligen Relativwert, insbesondere der Relativposition und/oder Orientierung addiert werden, so dass sich eine errechnete Andockstellengröße, insbesondere eine Andockstellenposition und/oder -orientierung, ausgehend vom jeweiligen Marker, ergibt. Dies kann für jeden einzelnen Marker durchgeführt werden und anschließend können diese redundanten Kandidaten für die Andockstellengröße zu einem Wert fusioniert werden. Vorzugsweise werden die Kovarianzinformationen der jeweiligen Markergrößen, die vorzugsweise basierend auf einem jeweiligen Sensor ermittelt sind, für eine sinnvolle Gewichtung herangezogen.

Die Relativwerte können beispielsweise auch bei der Montage der Marker initial gemessen und gespeichert werden, insbesondere im System, oder, wie bereits angeführt, vor dem Andockvorgang neu vermessen werden. Die Relativwerte können somit beispielsweise durch den Bediener in das System eingegeben werden oder automatisch, beispielsweise anhand einer Kennnummer oder ID aus einer oder der Datenbank abgerufen werden.

In weiterer Ausgestaltung der Erfindung, insbesondere bei unbekannten Relativwerten, kann der Sensor-Fusions-Algorithmus derart ausgestaltet sein, dass dieser aus den Sensordaten eines jeweiligen Sensors einen jeweiligen Relativwert schätzt. Vorzugsweise sind die Relativwerte hierbei konstant. Dies kann beispielsweise anhand eines Kalman-Filters erfolgen.

Mit anderen Worten kann der Sensor-Fusions-Algorithmus aus den Markergrößen der einzelnen Marker die Andockstellengröße ermitteln. Basierend auf der Qualitätsinformation kann der Sensor-Fusions-Algorithmus die einzelnen Signale so zusammenführen, damit das Ausgangssignal die größtmögliche Qualität aufweist. Die Aufgabe des Sensor-Fusions-Algorithmus ist die Gewinnung eines finalen Positions- und/oder Orientierungssignals aus mehreren redundanten Positions- und/oder Orientierungssignalen.

Es ist vorteilhafterweise nicht notwendig, dass die Andockstellengröße verfügbar ist. Nachdem die Relativwerte gelernt oder geschätzt wurden, kann der Sensor-Fusions-Algorithmus die Andockstellengröße aus den Markergrößen rekonstruieren. Dies ist äußerst vorteilhaft, wenn die Andockstelle verdeckt ist, was bei Andockvorgängen auftreten kann.

Vorzugsweise weist das System eine Mehrzahl von Sensoren auf. Zumindest zwei Sensoren können hierbei unterschiedliche Sensortypen sein. Weiter vorzugsweise ist mit den unterschiedlichen Sensortypen jeweils zumindest ein Markertyp erfassbar, wobei die Markertypen sich voneinander unterscheiden können. Es ist denkbar, dass der zumindest eine Sensor oder dass zumindest ein weiterer Sensor als Sensortyp in Form eines Radarsensors ausgebildet ist. Der Radarsensor wirkt vorzugsweise mit einem an den Radarsensor angepassten Marker zusammen. Als Markertyp für den Marker kann beispielsweise ein Triplespiegel vorgesehen sein. Alternativ oder zusätzlich ist denkbar, dass der zumindest eine Sensor oder ein weiterer Sensor als Sensortyp in Form einer Kamera, insbesondere einer Nahinfrarotkamera, ausgebildet ist. Die Kamera wirkt dabei vorzugsweise mit einem an die Kamera angepassten Marker zusammen. Der Marker kann als Markertyp in Form eines vordefinierten oder - bestimmten Musters ausgebildet sein. Alternativ oder zusätzlich kann der zumindest eine Sensor oder ein weiterer Sensor als Sensortyp in Form eines Lasers ausgebildet sein. Der Laser kann mit einem Marker vom Markertyp Mikroprisma oder Reflektionsprisma zusammenwirken. Alternativ oder zusätzlich ist denkbar, dass der zumindest eine Sensor oder ein weiterer Sensor als LIDAR (LIDAR = Light Detecting and Ranging) ausgebildet ist. Der LIDAR wirkt beispielsweise mit einem Marker zusammen, der als Markertyp mehrere zueinander geneigte reflektierenden Flächen hat, die jeweils Mikroprismen aufweisen können. Vorzugsweise sind die Flächen mit Folien beklebt, die Mikroprismen haben. Alternativ oder zusätzlich ist denkbar, dass der zumindest eine Sensor oder ein weiterer Sensor als Stereokamera ausgebildet ist. Vorzugsweise wird die Stereokamera zum Sensieren der Andockstelle verwendet. Basierend auf der Markierung des Benutzers zusammen mit den Sensordaten der Stereokamera kann dann die Andockstellengröße, insbesondere deren Position oder Orientierung, mit Unterstützung von Tiefeninformationen über den Bestimmungs-Algorithmus ermittelt werden. Somit kann bei Verwendung einer Stereokamera die räumliche Position und/oder Orientierung der von einer Person auf der Anzeigevorrichtung markierten Stelle mit Hilfe der Tiefeninformation bestimmt werden. Somit lässt sich auf einfache Weise der Relativwert zwischen der Andockstelle und den jeweiligen Markern bestimmen.

In weiterer Ausgestaltung der Erfindung kann der zumindest eine im System, insbesondere in einem Speicher, hinterlegte Relativwert zwischen der Andockstelle und dem zumindest einen Marker durch einen Vermessungs- und/oder Kalibrierungsvorgang initial oder vorab ermittelt sein. Alternativ oder zusätzlich ist denkbar, dass der zumindest eine Relativwert kontinuierlich vom System ermittelt ist, um einen oder mehrere der hinterlegten Relativwerte zu überprüfen. Außerdem ist denkbar, dass das System eine Datenbank aufweist, in der der zumindest eine Relativwert hinterlegt ist

Die Objekte sind vorzugsweise jeweils wassergebunden.

Erfindungsgemäß ist ein Verfahren mit dem System gemäß einem oder mehreren der vorhergehenden Aspekte vorgesehen.

Kurze Beschreibung der Zeichnungen

Bevorzugte Ausführungsbeispiele der Erfindung werden im Folgenden anhand schematischer Zeichnungen näher erläutert. Es zeigen:

Figur 1 schematisch ein System gemäß einem Ausführungsbeispiel, und
Figur 2 schematisch die Funktionsweise eines Sensor-Fusions-Algorithmus des Systems.

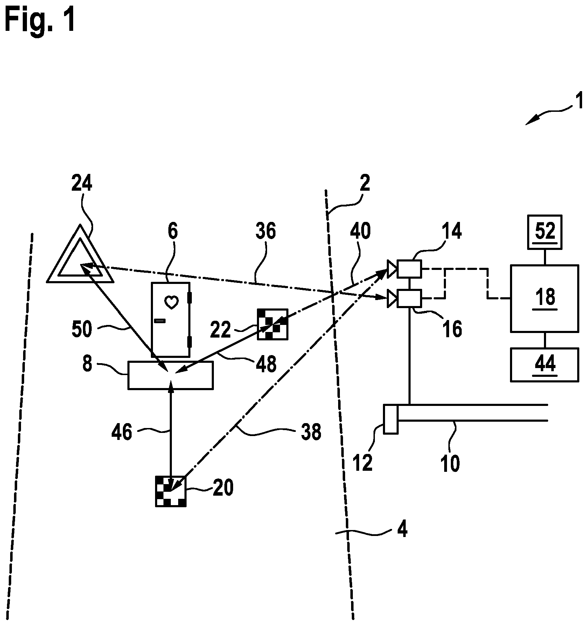

Gemäß Fig. 1 ist ein System 1 schematisch gemäß einem ersten Ausführungsbeispiel gezeigt. Dieses hat ein erstes Objekt in Form einer Windenergieanlage 2. Von dieser ist gemäß Fig. 1 ein Abschnitt eines Turms 4 der Windenergieanlage 2 gezeigt. Der Turm 4 weist einen Zugang mit einer Tür 6 auf. Unterhalb der Tür 6 ist eine Andockstelle 8 vorgesehen, die in der Figur 1 schematisch gekennzeichnet ist.

Des Weiteren ist in Fig. 1 ein Bauteil einer Gangway 10 dargestellt, die Teil eines nichtdargestellten zweiten Objekts ist. Die Gangway 10 hat stirnseitig einen Kontaktbereich 12, der in Anlage an die Andockstelle 8 gebracht werden soll. Das zweite Objekt ist als Schiff ausgebildet, wobei die Gangway 10 über zumindest einen Aktor relativ zum Schiff bewegbar ist und zusammen mit dem Schiff verfahrbar ist. An der Gangway 10 ist ein Sensor in Form einer Kamera 14 und ein weiterer Sensor in Form eines Radars 16 befestigt. Die Kamera 14 und der Radar 16 sind mit einer Steuereinheit 18 verbunden, die Sensordaten aufnimmt.

Gemäß Fig. 1 sind auf einer Außenfläche des Turms 4 Marker 20, 22 und 24 benachbart zur Andockstelle 8 ausgebildet. Die Marker 20 und 22 weisen hierbei ein fest definiertes Muster auf und können von der Kamera 14 erfasst werden. Der Marker 24 ist als Triplespiegel ausgebildet und kann vom Radar 16 erfasst werden.

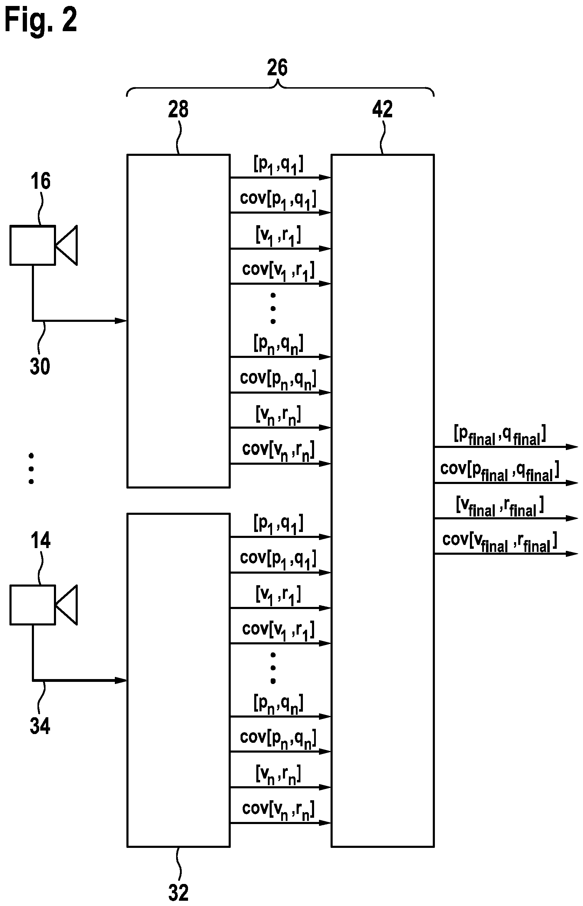

Gemäß Fig. 2 ist ein Bestimmungs-Algorithmus 26 der Steuereinheit 18, siehe Fig. 1, dargestellt. Dieser hat einen ersten Block 28, der Sensordaten 30 des Radars 16 aus Fig. 1 verarbeitet. Ein Block 32 verarbeitet Sensordaten 34 der Kamera 14. Im Block 28 werden aus den Sensordaten 30 Markergrößen 36 ermittelt, die gemäß Fig. 1 mit einem Pfeil dargestellt sind. Als Markergrößen 36 sind eine Position, Orientierung, Geschwindigkeit und Drehgeschwindigkeit des Markers 24 bezüglich des diesen Marker 24 erfassenden Radars 16 ermittelt. Im Block 32 werden Markergrößen 38, 40, siehe Figur 1, eines jeweiligen Markers 20 und 22 bestimmt. Bei den Markergrößen 38 und 40 handelt es sich ebenfalls jeweils um die Position, Orientierung, Geschwindigkeit und Drehgeschwindigkeit des jeweiligen Markers 20, 22 bezüglich der den jeweiligen Marker 20, 22 erfassenden Kamera 14. Die Position der jeweiligen Markergröße 36 bis 40 ist dabei vorzugsweise als Vektor mit drei Komponenten x, y, z ausgebildet. Die Orientierung kann ebenfalls als Vektor mit drei Winkeln, wie beispielsweise Eulerwinkel, a1, a2, a3 ausgebildet sein. Alternativ ist denkbar, die Orientierung mit vier Quaternionen qw, qx, qy, qz auszubilden. Die Geschwindigkeit ist ebenfalls aus drei Komponenten vx, vy, vz gebildet. Außerdem ist die Drehgeschwindigkeit aus drei Komponenten rx, ry, rz gebildet. Zu den Sensordaten 30, 34 oder Sensorsignalen wird auch eine Qualitätsinformation mitgesendet, wie beispielsweise eine Kovarianz der Sensorsignale oder Sensordaten 30, 34. Gemäß Fig. 2 wird vom Block 28 die Markergröße 36 in Form einer Position $p_1$, einer Orientierung $q_1$, einer Geschwindigkeit $v_1$ und einer Drehgeschwindigkeit $r_1$ einem Sensor-Fusions-Algorithmus 42 gemeldet. Dieser ist Teil des Bestimmungs-Algorithmus 26. Außerdem wird die Kovarianz (cov) zu den genannten Markergrößen 36 übermittelt. Des Weiteren ist ausgangseitig des Blocks 28 vorgesehen, weitere Markergrößen $p_n$, $q_n$, $v_n$, $r_n$ von möglichen weiteren über den Radar 16 erfassbaren Markern zusammen mit ihrer entsprechenden Kovarianz dem Sensor-Fusions-Algorithmus 42 zu melden. Das heißt, falls weitere für den Radar 16 vorgesehene Marker vorgesehen wären, so können deren Sensordaten über den Block 28 verarbeitet werden, um deren Markergröße zu ermitteln. Der Block 32 übermittelt ebenfalls an den Sensor-Fusions-Algorithmus 42 entsprechend dem Block 28 die ermittelten Markergrößen(nur Radar), 38, 40 für die Marker 20 und 22 und eventuell für weitere derartige Marker.

Gemäß Figur 1 weist das System 1 einen Speicher 44 auf. In diesem sind Relativwerte zwischen der Andockstelle 8 und dem jeweiligen Marker 20, 22 und 24 hinterlegt. Als Relativwerte sind eine Relativposition, eine Relativorientierung, eine Relativgeschwindigkeit und eine Relativdrehgeschwindigkeit zwischen der Andockstelle 8 und dem jeweiligen Marker 20 bis 24 vorgesehen. Gemäß Figur 2 ermittelt der Bestimmungs-Algorithmus 26, insbesondere dessen Sensor-Fusions-Algorithmus 42 aus den Markergrößen 36, 38, 40 und den Relativwerten Andockstellengrößen. Als Andockstellengrößen sind eine Position, Orientierung, Geschwindigkeit und Drehgeschwindigkeit der Andockstelle 8 bezüglich des den jeweiligen Marker 20, 22 und 24 erfassenden Sensors, also Kamera 14 oder Radar 16. Die Andockstellengrößen werden dadurch ermittelt, dass eine Addition, insbesondere eine Vektoraddition, zwischen den jeweiligen Markengrößen 36, 38, 40 der jeweiligen Marker 20, 22 und 24 mit den Relativwerten zwischen der Andockstelle 8 und dem jeweiligen Marker 20, 22 und 24 erfolgt. Gemäß Figur 1 sind Relativwerte 46 zwischen dem Marker 20 und der Andockstelle 8, Relativwerte 48 zwischen dem Marker 22 und der Andockstelle 8 und Relativwerte 50 zwischen dem Marker 24 und der Andockstelle 8 jeweils durch einen Pfeil dargestellt. Somit kann durch Addition der Markergrößen 36, 38, 40 eines jeweiligen Markers 20, 22, 24 mit den jeweiligen Relativwerten 46, 48, 50 die jeweiligen Andockstellengrößen ermittelt werden. Die Andockstellengrößen werden somit bezüglich eines jeweiligen Markers 20, 22 und 24 ermittelt. Anschließend können redundante Kandidaten für die Andockstellengrößen zu einem Wert durch den Sensor-Fusions-Algorithmus 42 aus Figur 2 fusioniert werden. Dabei werden die jeweiligen Kovarianzinformationen der einzelnen Sensordaten 30, 34 oder einzelnen Sensorsignale für eine sinnvolle Gewichtung herangezogen. Gemäß Figur 2 sind ausgangsseitig des Sensor-Fusions-Algorithmus die fusionierten Andockstellengrößen $p_{final}$, $q_{final}$, $v_{final}$, $r_{final}$ und entsprechende Kovarianzen (COV) vorgesehen. Anhand dieser Andockstellengrößen kann dann die Steuereinheit 18 aus Figur 1 einen oder mehrere Aktoren 52 ansteuern, um das Schiff und/oder die Gangway 10 zu bewegen, um den Kontaktbereich 12 an die Andockstelle 8 anzunähern und diese insbesondere in Kontakt zu bringen

Denkbar wäre, dass der Sensor-Fusions-Algorithmus 42 alternativ zur Sensorfusion einfach eine gleichgewichtige Mittelwertbildung vorsieht. Diese kann aber häufig in der Praxis nicht ausreichend sein, da die Signalqualität der Sensordaten 30, 34 - die beispielsweise durch Kovarianzen ausgedrückt werden kann - dabei nicht berücksichtigt wird und sich die Signalqualität jederzeit dynamisch im Betrieb ändern kann. Außerdem besteht die Möglichkeit, dass einzelne Sensoren einen oder mehrere Marker 20, 22, 24, insbesondere meist nur temporär, nicht erkennen können. Somit ist als Sensor-Fusions-Algorithmus 42 vorzugsweise, wie vorstehend bereits erläutert, beispielsweise ein Kalman-Filter vorgesehen.

Sind die Relativwerte zwischen der Andockstelle 8 und dem jeweiligen Marker 20 bis 24 unbekannt, aber vorzugsweise konstant, so können diese vom Sensor-Fusions-Algorithmus 42 aus Figur 2 mitgeschätzt werden. Hierbei wird der Sensor-Fusions-Algorithmus 42 vorzugsweise als Kalman-Filter ausgebildet. Für die Andockstellengrößen kann dabei ein dynamisches Modell in Form einer Differentialgleichung eingesetzt werden - ein sogenanntes Motion Modell - was durch folgende Gleichung darstellbar ist:

$$\frac{d}{dt}\begin{pmatrix} s \\ \dot{s} \\ \vdots \\ s^{(n)} \end{pmatrix} = f\left(s, \dot{s}, \cdots, s^{(n)}\right)$$

Diesem Modell gemäß der genannten Gleichung können verschiedene Modellannahmen für die Änderung der Andockstellengrößen zugrunde gelegt werden. Als Modellannahme kann beispielsweise eine konstante Geschwindigkeit vorgesehen sein. Entsprechend kann auch die Ordnung n des Modells variieren. Bei der genannten Formel wird mit s der Vektor bezeichnet, der die Andockstellengrößen, wie beispielsweise die Position und Orientierung der Andockstelle, beschreibt, also beispielsweise sieben Einträge hat, px, py, pz, qw, qx, qy, qz. Zusätzlich wird ein dynamisches Modell für die Relativwerte zwischen den jeweiligen Markern 20, 22 und 24 und der Andockstelle 8 formuliert, was mit folgender Gleichung ausgedrückt werden kann:

$$\frac{d}{dt}[\Delta p] = 0$$

Da sich die Relativwerte nicht ändern und als konstant angenommen werden, wird die Ableitung in der genannten Gleichung zu Null gesetzt. Der Vektor $\Delta p$ enthält hier die Relativpositionen für alle n Marker 20, 22 und 24. Das heißt, er hat sieben Einträge $\Delta px$, $\Delta py$, $\Delta pz$, $\Delta qw$, $\Delta qx$, $\Delta qy$, $\Delta qz$ pro Marker 20, 22, 24, also insgesamt n * 7 Einträge. Mit diesem erweiterten Satz an Gleichungen ist der Sensor-Fusions-Algorithmus 42 in der Lage, die bestmöglichen Andockstellengrößen, insbesondere die Andockstellenposition und -orientierung, basierend auf den Sensordaten 30, 34 zu schätzen, obwohl die Relativwerte zwischen den Markern 20, 22 und 24 und der Andockstelle 8 nicht gegeben sind.

Bei der beschriebenen Ausführungsform wurde ein Offshore-Andockverfahren für die Gangway 10 in Form einer Offshore-Gangway beschrieben. Das System kann beispielsweise auch für Offshore-Load-Handling-Geräte, wie beispielsweise Offshore-Kräne oder Loading Arms, verwendet werden.

Vorzugsweise ist bei dem System vorgesehen, dass ein jeweiliges Objekt oder zumindest ein Objekt im Wasser schwimmend oder fest angeordnet ist.

Erfindungsgemäß ist ein System zur Bestimmung der Andockstellenposition über geeignete Markierungen, Reflektoren oder andere Landmarken, angebracht auf dem Objekt, an dem angedockt werden soll, bestimmbar??. Diese Marker können von den verwendeten Sensoren zuverlässig erfasst werden und deren Position und Orientierung lässt sich anschließend zuverlässig und mit überschaubarem Aufwand mit Hilfe geeigneter Algorithmen aus den Sensordaten bestimmen. Anschließend wird von der Position und Orientierung der Marker auf die Position und Orientierung der Andockstelle zurückgeschlossen. Vorzugsweise kann dies mit bekannter Relativposition zwischen den Markern und der Andockstelle als auch mit unbekannter Relativposition zwischen den Markern und der Andockstelle erfolgen, insbesondere, wenn die Relativposition konstant ist.

Offenbart ist ein System mit einem Objekt, das eine Andockstelle und einen Marker oder mehrere Marker aufweist. Außerdem hat das System ein weiteres Objekt, das zumindest einen Sensor hat, um den oder die Marker zu erfassen. Das System hat eine Steuereinheit mit einem Bestimmungs-Algorithmus, der basierend auf den Sensordaten des zumindest einen Sensors die Markerposition und/oder die Markerorientierung bezüglich des Sensors ermittelt. Außerdem hat der Bestimmungs-Algorithmus Zugriff auf einen Relativwert in Form einer Relativposition und/oder Relativorientierung zwischen dem Marker oder dem jeweiligen Marker und der Andockstelle. Die Steuereinheit kann dann basierend auf der Markergröße und dem Relativwert die Andockstellenposition und/oder die Andockstellenorientierung ermitteln.

Bezugszeichenliste

| | |
|---|---|
| 1 | System |
| 2 | Windenergieanlage |
| 4 | Turm |
| 6 | Tür |
| 8 | Andockstelle |
| 10 | Gangway |
| 12 | Kontaktbereich |
| 14 | Kamera |
| 16 | Radar |
| 18 | Steuereinheit |
| 20, 22, 24 | Marker |
| 26 | Bestimmungs-Algorithmus |
| 28, 32 | Block |
| 30, 34 | Sensordaten |
| 36, 38, 40 | Markergröße |
| 42 | Sensor-Fusions-Algorithmus |

44        Speicher
46, 48, 50    Relativwert
52        Aktor

**Patentansprüche**

1. System mit einem ersten Objekt (2), das eine Andockstelle (8) und zumindest einen mit der Andockstelle (8) in Bezug stehenden Marker (20, 22, 24) aufweist, und mit einem zweiten Objekt, das ein Bauteil (10) mit einem Kontaktbereich (12) aufweist, der in Kontakt mit der Andockstelle (8) bringbar ist und/oder der benachbart zu dieser anordenbar ist, wobei das zweite Objekt zumindest einen Aktor (52) aufweist, um dieses und/oder das Bauteil (10) zu bewegen, und/oder wobei das erste Objekt (2) zumindest einen Aktor aufweist, um dieses zu bewegen, wobei das zweite Objekt zumindest einen Sensor (14, 16) und eine mit dem Sensor (14, 16) verbundene Steuereinheit (18) hat, wobei der zumindest eine Sensor (14, 16) derart ausgestaltet ist, den zumindest einen Marker (20, 22, 24) zu erfassen, um diesen über Sensordaten (30, 34) der Steuereinheit (18) anzuzeigen, wobei die Steuereinheit (18) einen Bestimmungs-Algorithmus (26) aufweist, der eingerichtet ist, basierend auf den Sensordaten (30, 34) des zumindest einen Sensors (14, 16) zumindest eine Markergröße (36, 38, 40) in Form einer Position und/oder Orientierung und/oder Geschwindigkeit und/oder einer Drehgeschwindigkeit des zumindest einen Markers (20, 22, 24) bezüglich des diesen Marker (20, 22,24) erfassenden Sensors (14, 16) und/oder bezüglich einer Referenz am zweiten Objekt zu ermitteln, wobei ein Relativwert in Form einer Relativposition und/oder Relativorientierung und/oder Relativgeschwindigkeit und/oder Relativdrehgeschwindigkeit zwischen der Andockstelle (8) und dem zumindest einen Marker (20, 22, 24) beim System (1) vorgesehen ist, wobei die Steuereinheit (18) derart eingerichtet ist, dass diese basierend auf der vom Bestimmungs-Algorithmus (26) ermittelten Markergröße (36, 38, 40) des zumindest einen Markers (20, 22, 24) und dem Relativwert (46, 48, 50) eine Andockstellengröße bezüglich des diesen Marker (20, 22, 24) erfassenden Sensors (14, 16) oder bezüglich einer Referenz am zweiten Objekt ermittelt.

2. System nach Anspruch 1, wobei ein Speicher (44) vorgesehen ist, in dem der zumindest eine Relativwert (46, 48, 50) hinterlegt ist und/oder wobei ein Eingabemittel vorgesehen ist, über das ein Benutzer den Relativwert (46, 48, 50) im System (1) eingeben kann.

3. System nach Anspruch 1 oder 2, wobei der zumindest eine Sensor (14, 16) oder ein weiterer Sensor (14, 16) derart ausgestaltet ist, die Andockstelle (8) zu erfassen und über Sensordaten (30, 34) der Steuereinheit (18) zu übermitteln, wobei die Steuereinheit (18) einen oder den Bestimmungs-Algorithmus aufweist, der eingerichtet ist, basierend auf den Sensordaten (30, 34) des Sensors (14, 16) hinsichtlich der Andockstelle (8) zumindest eine Andockstellengröße in Form einer Position und/oder Orientierung und/oder Geschwindigkeit und/oder Drehgeschwindigkeit der Andockstelle (8) bezüglich des die Andockstelle (8) erfassenden Sensors (14, 16) und/oder bezüglich einer Referenz am zweiten Objekt und/oder bezüglich des zumindest einen Markers (20, 22, 24) zu ermitteln, und wobei durch die Steuereinheit (18) basierend auf der Markergröße (36, 38, 40) und der Andockstellengröße der Relativwert (46, 48, 50) ermittelt ist.

4. System nach Anspruch 3, wobei die Ausgestaltung der Andockstelle (8) beim System (1) hinterlegt ist und der Bestimmungs-Algorithmus (26) die hinterlegte Ausgestaltung mit den Sensordaten (30, 34) des die Andockstelle (8) erfassenden Sensors (14, 16) vergleicht, um die Andockstellengröße zu ermitteln.

5. System nach einem der vorhergehenden Ansprüche, wobei eine Anzeigevorrichtung vorgesehen ist, auf der die Sensordaten (30, 34) eines oder des zumindest einen die Andockstelle (8) erfassenden Sensors (14, 16) dargestellt sind, wobei das System (1) ein Mittel aufweist, über das eine Position der Andockstelle (8) auf der Anzeigevorrichtung von einem Benutzer markierbar ist, wobei basierend auf der Markierung der Bestimmungs-Algorithmus die Andockstellengröße ermittelt.

6. System nach einem der vorhergehenden Ansprüche, wobei eine Mehrzahl von Sensoren (14, 16) vorgesehen sind, um einen oder mehrere Marker (20, 22, 24) und/oder die Andockstelle (8) zu erfassen, und/oder wobei eine oder die Mehrzahl von Sensoren (14, 16) vorgesehen ist, wobei zumindest zwei Sensoren (14, 16) unterschiedliche Sensortypen sind, wobei mit den unterschiedlichen Sensortypen jeweils zumindest ein Markertyp erfassbar ist, wobei die Markertypen sich voneinander unterscheiden.

7. System nach Anspruch 6, wobei der Bestimmungs-Algorithmus (26) einen Sensor-Fusions-Algorithmus (42) aufweist, der derart ausgestaltet ist, um die Sensordaten (30; 34) der Mehrzahl von Sensoren (14, 16) zu fusionieren, um daraus eine Markergröße (36, 38, 40) und/oder eine Andockstellengröße zu ermitteln.

8. System nach Anspruch 7, wobei der Sensor-Fusions-Algorithmus (42) die jeweiligen Markergrößen (36, 38, 40), die basierend auf einem jeweiligen Sensor (14, 16) ermittelt sind, fusioniert und/oder die jeweiligen Andockstellengrößen, die basierend auf einem jeweiligen Sensor (14, 16) ermittelt sind, fusioniert.

9. System nach Anspruch 7 oder 8, wobei der Sensor-Fusions-Algorithmus (42) die jeweiligen Andockstellengrößen ermittelt, die sich aus einer jeweiligen Markergröße (36, 38, 40), die basierend auf einem jeweiligen Sensor (14, 16) ermittelt ist, und dem jeweiligen Relativwert (46, 48, 50) ergibt, wobei die Andockstellengrößen im Anschluss fusioniert sind.

10. System nach einem der vorhergehenden Ansprüche, wobei der Bestimmungs-Algorithmus (26) derart ausgestaltet ist, dass dieser aus den Sensordaten (30, 34) eines jeweiligen Sensors (14, 16) den Relativwert zwischen der Andockstelle (8) und dem Marker (20, 22, 24) oder den jeweiligen Markern (20, 22, 24) schätzt.

11. Verfahren mit dem System gemäß einem der vorhergehenden Ansprüche.

# Fig. 1

# Fig. 2